# EUROPÄISCHE PATENTSCHRIFT

(11) **EP 1 029 494 B1**
(45) Veröffentlichungstag und Bekanntmachung des Hinweises auf die Patenterteilung: **28.04.2004**
(21) Anmeldenummer: 00102070.0
(22) Anmeldetag: 02.02.2000
(51) Int. Cl.: A47J 41/00, G01F 23/20

(54) **Behältnis**
Container
Récipient

(30) Priorität: 19.02.1999 DE 19907055
(43) Veröffentlichungstag der Anmeldung: 23.08.2000
(73) Patentinhaber: BSH Bosch und Siemens Hausgeräte GmbH, 81739 München (DE)
(72) Erfinder: Zinsberger, Alfons, 83410 Laufen (DE); Eggersdorfer, Hermann, 83308 Trostberg (DE); Beutlrock, Maximilian, 83361 Kienberg (DE); Gschossmann, Horst, 84518 Garching (DE); Steiner, Gerhard, 83228 Traunstein (DE); Mack, Kondrad, 85137 Walting-Pfalzpaint (DE)

(56) Entgegenhaltungen:
- DE-A- 4 343 919
- DE-A- 19 600 888
- FR-A- 2 170 849
- US-A- 4 056 156

## Beschreibung

Die Erfindung betrifft ein Behältnis für den Haushaltsgebrauch mit einer Füllstandsanzeige.

Behältnisse für den Haushaltsgebrauch mit einer Füllstandsanzeige sind bekannt. Beispiele dafür sind z.B. Wasserkocher mit einem Sichtfenster und einer daran angebrachten Skala oder Kannen mit einem Sichtfenster mit Skala, möglicherweise zur Verdeutlichung des Füllstands auch mit einem Schwimmer. Bei einem Sichtfenster kann durch ein bestimmtes Reflexionsmuster der Füllstand in einem Behältnis noch verdeutlicht werden, wenn das Reflexionsmuster an die optischen Eigenschaften der Flüssigkeit entsprechend angepaßt ist.

Nachteilig an Behältnissen mit derartigen Füllstandsanzeigen ist, daß diese Art von Füllstandsanzeigen nicht bei doppelwandigen Gefäßen angewandt werden können, insbesondere nicht bei Thermoskannen, die in der Regel als Innenbehälter einen verspiegelten Glaskörper beinhalten.

Aus der DE 43 43 919 A1 ist ein Behältnis mit einer Füllstandsanzeige bekannt, die einen Drucksensor und eine Leiterplatte mit elektronischen Anzeigeelementen umfaßt. Eine solche elektronische Füllstandsanzeige ist technisch aufwendig und besonders empfindlich, vor allem gegen eindringende Feuchtigkeit.

Der Erfindung liegt daher die Aufgabe zugrunde, eine Füllstandsanzeige für ein Behältnis für den Haushaltsgebrauch zu schaffen, die gleichermaßen für beliebige Behältnistypen anwendbar ist, in ihren Kosten und ihrem technischen Aufwand aber dennoch günstig ist.

Diese Aufgabe wird gelöst mit einem die Merkmale des Anspruchs 1 aufweisenden Behältnis. Erfindungsgemäß ist dazu an ein Behältnis für den Haushaltsgebrauch mit einer Füllstandsanzeige an mindestens einer Auflage dieses Behältnisses eine Aufnahmevorrichtung für die Gewichtskraft auf diese Auflage angeordnet. Einer vorgegebenen Gewichtskraft entspricht eine definierte Auslenkung der Aufnahmevorrichtung. Diese Auslenkung ist wiederum mit der Höhe einer Flüssigkeitssäule in einem Anzeigeelement korreliert.

Diese Aufnahmevorrichtung weist vorteilhafter Weise einen Kolben auf, der in Wirkverbindung mit einem Flüssigkeitsreservoir veränderlichen Volumens angeordnet ist, das mit besagter Flüssigkeitssäule verbunden ist. Der Kolben ist dabei vorzugsweise mittels einer Feder vorgespannt. Wird das Behältnis befüllt, so ändert sich dessen Gewichtskraft. Die höhere Kraft auf die Auflage des Behältnisses bewirkt in der Aufnahmevorrichtung für die Gewichtskraft auf diese Auflage, daß sich der Kolben entgegen der Federspannung verschiebt. Der Kolben verschiebt sich solange, bis sich Gleichgewicht zwischen der auf den Kolben wirkenden Gewichtskraft und der Federvorspannung in erster Näherung einstellt. Das Flüssigkeitsreservoir wird durch die Einwirkung des Kolbens in der Weise deformiert, daß sich sein Volumen verringert. Die Flüssigkeit muß daher in Richtung Flüssigkeitssäule ausweichen, so daß die Flüssigkeitssäule sich erhöht.

Das Flüssigkeitsreservoir ist vorzugsweise als Faltenbalg ausgebildet. Durch die günstige Form des Faltenbalgs 8 entsteht ein weitgehend linearer Zusammenhang zwischen Auslenkung des Kolbens und Verdrängung der Flüssigkeit aus dem Flüssigkeitsreservoir. Dies führt wiederum zu einem linearen Zusammenhang zwischen Auslenkung des Kolbens und Höhe der Flüssigkeitssäule. Da die Auslenkung des Kolbens nach dem Hook'schen Gesetz wiederum proportional zur Kraft auf den Kolben, respektive der Auflagekraft ist, ist die Höhe der Flüssigkeitssäule linear abhängig von der Gewichtskraft auf die Auflage.

Das Anzeigeelement weist dabei in vorteilhafter Weise an seinem oberen Bereich ein Überlaufreservoir für die Flüssigkeit in der Flüssigkeitssäule auf. Das Volumen dieses Uberlaufreservoirs läßt sich dabei ohne merklichen Druckautwand erhöhen. Dadurch kann dieses Überlaufreservoir die durch die ansteigende Flüssigkeitssäule verdrängte Luft aufnehmen, ohne daß der Druck in dem Anzeigeelement spürbar ansteigt.

Das Überlaufreservoir weist vorzugsweise einen konischen Übergang zu dem die Flüssigkeitssäule aufnehmenden Teil des Anzeigeelements auf. Dadurch kann Flüssigkeit, die in das Überlaufreservoir hineinverdrängt worden ist, bei abnehmendem Druck auf das Flüssigkeitsreservoir wieder vollständig in den die Flüssigkeitssäule aufnehmenden Teil des Anzeigeelements zurücklaufen.

Vorteilhaft ist die Kompressibilität des Überlaufreservoirs mindestens gleich groß wie die des Flüssigkeitsreservoirs. Dies ermöglicht, daß sich bei zunehmender Gewichtskraft auf die Auflage, respektive ansteigender Flüssigkeitssäule im Anzeigeelement kein merklicher Luftdruckanstieg auftritt. Die Luft in dem Anzeigeelement wird durch die Flüssigkeitssäule nach oben geschoben, dabei steigt das Volumen in dem Überlaufreservoir um nahezu das verdrängte Luftvolumen an.

In einer vorteilhaften Ausgestaltung der Erfindung ist das die Flüssigkeitssäule aufnehmende Anzeigeelement aus einem flexiblen Material ausgebildet. Vorzugsweise besteht dieses Anzeigeelement aus Polyethylen. Dazu ist vorteilhafter Weise das Anzeigeelement, das Flüssigkeitsreservoir und das Überlaufreservoir beinhaltend als einstückiges Blasformteil ausgebildet.

In einer anderen vorteilhaften Ausgestaltung der Erfindung bestehen das Flüssigkeitsreservoir und das Überlaufreservoir aus thermoplastischem Elastomer. Thermoplastisches Elastomer erfüllt die erforderliche Shorehärte und ist gleichzeitig resistent gegen die Flüssigkeit in dem Anzeigeelement.

Vorteilhafter Weise ist die Flüssigkeit der Flüssigkeitssäule eingefärbter Spiritus. In einer anderen vorteilhaften Ausgestaltung ist die Flüssigkeit Polyethylenglykol. Dies hat zum Vorteil, daß es nahezu eine stufenlos einstellbare Viskosität besitzt, toxikologisch unbedenklich ist und kein Aufquellen oder Zersetzen des Flüssigkeitsreservoirs bewirkt. Außerdem läßt es sich dauerhaft einfärben, schäumt nicht und ist sehr alterungsbestandig.

Vorzugsweise ist das Anzeigeelement derart ausgestaltet, daß eine Auslenkung der Aufnahmevorrichtung von ca. 2 mm ein Hub der Flüssigkeitssäule von ca. 50 mm entspricht. Durch dieses hohe Übersetzungsverhältnis kann ohne daß ein deutliches Einfedern des Behälters in die Aufnahmevorrichtung erforderlich ist, der Füllstand in dem Behälter mit hoher Genauigkeit angezeigt werden.

In einer vorteilhaften Ausgestaltung der Erfindung ist auf der dem Kolben gegenüberliegenden Seite des Flüssigkeitsreservoirs eine Druckplatte angeordnet, an der sich die Gegenkraft zu der von dem Kolben aufgebrachten Kraft abstützt. Auf diese Weise wird gewährleistet, daß das Volumen des Flüssigkeitsreservoirs durch den Kolben in linearer Beziehung verringert wird. Eine Verfälschung dieser Beziehung durch eine Verschiebung des Flüssigkeitsreservoirs wird damit verhindert.

Vorzugsweise ist das Anzeigeelement in einem Griff des Behälters angeordnet. Befinden sich neben den Anzeigeelement zusätzlich noch die Aufnahmevorrichtung für die Gewichtskraft mit dem federvorgespannten Kolben, so sind alle wesentlichen Teile der Füllstandsanzeige in einen Griffteil angeordnet, das als extra Gehäuseteil ausgebildet werden kann. Damit ist es möglich, die Anzeige fertig vorzumontieren und anschließend als komplett vormontiertes Teil an dem Behälter anzuschließen.

In einer vorteilhaften Ausgestaltung der Erfindung steht das Behältnis auf einer Dreipunktauflage. Dabei ist an einer der drei Auflagen die Aufnahmevorrichtung für die Gewichtskraft auf diese Auflage angeordnet. Aus der Geometrie die Dreipunktauflage läßt sich aus der Kraft auf die Auflage der Aufnahmevorrichtung die gesamte Beladung des Behälters bestimmen. Diese läßt sich damit absolut oder relativ mit der Füllstandsanzeige aufzeigen.

Vorzugsweise weist die Dreipunktauflage zwei vordere Auflagepunkte auf, die Bestandsteil des Grundkörpers des Behälters sind. Ihre Verbindungslinie bildet dabei eine Drehachse, um die das Behältnis drehbar in einem hinteren Auflagepunkt einfedern kann.

In einer vorteilhaften Ausgestaltung der Erfindung ist der hintere Auflagepunkt im Griffteil des Behältnisses angeordnet. Ist die Aufnahmevorrichtung für die Gewichtskraft und das Anzeigeelement ebenfalls im Griffteil des Behältnisses angeordnet so befinden sind alle wesentlichen Teile der Füllstandsanzeige im Griffteil. Dieses Griffteil kann als extra Gehäuseteil ausgebildet sein. Damit ist es möglich die Anzeige fertig vorzumontieren und anschließend als komplett montiertes Teil mit dem Behältnis zu verbinden, vorzugsweise zu verschnappen. Vorteihafterweise sind die drei Auflagepunkte um ca. 120 Grad versetzt. Damit ergibt sich eine gleichmäßige Auflage und eine leicht zu justierende Füllstandsanzeige.

In einem vorteilhaften Verfahren zur Herstellung eines derartigen Behältnisses sind alle wesentlichen Teile der Füllstandsanzeige in einem Gehäuse für ein Griffteil fertig vormontiert. Anschließend wird dieses fertig montierte Teil mit dem Behältnis verbunden, vorzugsweise verschnappt.

Gemäß einer zweiten Lösung der Aufgabe der Erfindung ist eine Thermoskanne mit einer Füllstandsanzeige ausgestattet, wobei zur Füllstandsbestimmung eine Wägeeinheit zur Gewichtskraftmessung an mindestens einer Auflage der Thermoskanne angeordnet ist. Dabei ist jegliche Art der Darstellung der Gewichtskraft, insbesondere mechanische Übersetzung mit Zeigeranzeige möglich.

In den Zeichnungen ist ein Ausführungsbeispiel der Erfindung dargestellt

Es zeigen:

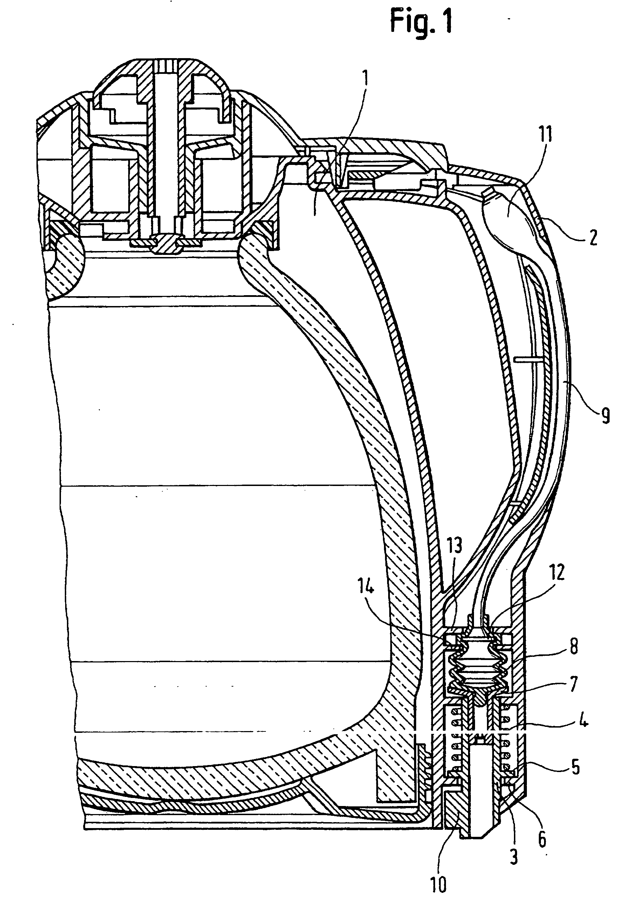

- Fig. 1: einen Querschnitt einer erfindungsgemäßen Thermoskanne mit Griffteil und der darin befindlichen Füllstandsanzeige.

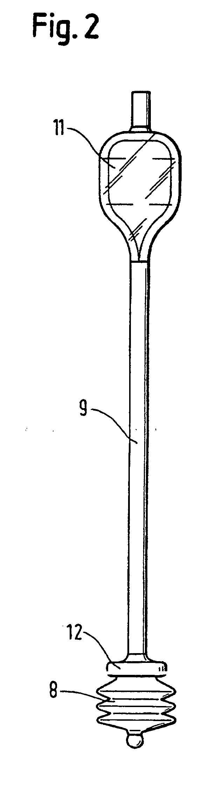

- Fig. 2: ein Blasformteil, bestehend aus einem Faltenbalg, einer Druckplatte, einem schlauchförmigen Teil, der eine Flüssigkeitsanzeige bildet und einem Überlaufreservoir der Flüssigkeitsanzeige.

Eine Thermoskanne 1 steht auf drei nicht dargestellten um jeweils 120 Grad versetzten Auflagepunkten. Ein Auflagepunkt befindet sich dabei direkt unterhalb eines Griffteils 2. Die beiden anderen Auflagepunkte befinden sich im wesentlichen im vorderen Abschnitt der Thermoskanne 1 und sind fester Bestandteil der Thermoskanne 1. Der Auflagepunkt im Griffteil 2 ist einstückig mit einem Kolben 3 ausgebildet, der mittels einer Feder 4 nach unten gedrückt wird bis er sich mit einem Falz 5 an einer Anschlagsfläche 6 des Griffteils 2 abstützt. Die Federkraft ist dabei günstigerweise derart gewählt, daß bei leerer Thermoskanne 1 der Falz 5 an der Anschlagsfläche 6 nahezu kraftlos zum Anliegen kommt. Wird die Thermoskanne 1 befüllt, so nimmt ihre Gewichtskraft zu. Dies bedeutet, daß die Kraft auf die drei Auflagepunkte gleichermaßen ansteigt. Bereits bei einer geringen zusätzlichen Gewichtskraft bei Befüllung der Thermoskanne 1 verliert der Falz 5 den Kontakt mit der Anschlagsfläche 6. Bei weiter zunehmender Kraft auf den Auflagepunkt im Griffteil bewegt sich der Kolben 3 entgegen der Federvorspannung nach oben und drückt dabei die Feder 4 zusammen. Dabei drückt ein weiterer Falz 7 des Kolbens 3 auf einen Faltenbalg 8, der ein Reservoir für ein Füllmedium der Flüssigkeitsanzeige 9 ist. Mit zunehmender Befüllung der Thermoskanne 1 und damit steigender Kraft auf den Kolben 3 wird die Feder 4 zunehmend zusammengedrückt und infolge des Hook'schen Gesetzes entsteht bei passend gewählter Vorspannung der Feder 4 ein linearer Zusammenhang zwischen der durch die Befüllung der Thermoskanne 1 bewirkten Gewichtskraft unter Auslenkung des Kolbens 3. Der Kolben 3 drückt auf den Faltenbalg 8 und verdrängt dabei die Flüssigkeit aus dem Faltenbalg in Richtung der Flüssigkeitsanzeige 9. Durch die günstige Geometrie des Faltenbalgs 8 bewirkt eine lineare Stauchung des Faltenbalgs 8 eine lineare Abnahme seines Volumens und damit eine lineare Zunahme des Volumens in der Flüssigkeitsanzeige 9. Dabei steigt die Flüssigkeitssäule in der Flüssigkeitsanzeige 9 linear mit der Verdrängung der Flüssigkeit aus dem Faltenbalg 8, respektive der Auslenkung des Kolbens 3, respektive der Gewichtskraft der Thermoskanne 1 durch die Befüllung an. Durch die entsprechende Wahl der Querschnitte von einerseits dem Faltenbalg 8 anderseits der Flüssigkeitssäule in der Flüssigkeitsanzeige 9 wird ein hohes Übersetzungsverhältnis von ca. einem Faktor 25 erzielt. Das bedeutet, 2 mm Hub des Kolbens 3 entsprechen einem Ansteigen der Flüssigkeitssäule von ca. 50 mm. Beim Befüllen der Thermoskanne 1 schwenkt diese um ihre beiden vorderen festen Auslagepunkte, die eine Drehachse definieren, leicht nach hinten, wobei sie sich im Bereich des Griffteils 2 bei voller Befüllung um ca. 2 mm absenkt. Ist die Thermoskanne 1 voll befüllt, so hat die Flüssigkeitssäule ihren höchsten Punkt in der Flüssigkeitsanzeige erreicht. Wird zusätzlich weitere Gewichtskraft auf die Thermoskanne 1 ausgeübt, so schlägt ein dritter Falz 10 der am Kolben 3 unterhalb der Höhe der Anschlagsfläche 6 angebracht ist, von unten an dieser an, und nimmt die zusätzliche Kraft auf die Thermoskanne 1 auf. Ein weiteres Ansteigen der Flüssigkeit in der Flüssigkeitssäule durch diese nicht durch die Füllmenge der Thermoskanne 1 bewirkte zusätzliche Gewichtskraft auf die Thermoskanne 1 wird dadurch vermieden. Ein Überlaufreservoir 11 nimmt das aus der Flüssigkeitsanzeige durch die ansteigende Flüssigkeitssäule verdrängte Luftvolumen auf. Dabei läßt sich dieses Überlaufreservoir 11 in seinem Volumen sehr leicht expandieren, so daß der Druck in der Flüssigkeitsanzeige nur geringfügig bei zunehmendem Füllstand der Thermoskanne 1 zunimmt. Dies hat zur Folge, daß die Linearität zwischen Kraft auf den Kolben 3 und Auslenkung des Kolbens 3, die durch die Feder 4 bewirkt wird, nicht durch eine zusätzliche druckabhängige Kraftkomponente, die von dem Faltenbalg 8 aufgebracht wird, verfälscht wird. Der Faltenbalg 8 weist drei Falten auf, an die sich an seinem oberen Ende eine Druckplatte 12 anschließt. Die Druckplatte 12 ist zwischen zwei Anschlagsflächen 13 und 14 angeordnet, die verhindern, daß das obere Ende des Faltenbalgs 8 nach oben bzw. unten ausweichen kann und dadurch eine Verschiebung des Faltenbalgs 8 verhindern und wodurch der lineare Zusammenhang zwischen Auslenkung des Kolbens 3 und Höhe der Flüssigkeitssäule in der Flüssigkeitsanzeige 9 sichergestellt wird. Faltenbalg 8, Druckplatte 12, Flüssigkeitsanzeige 9 und Überlaufreservoir 11 sind als einstückiges Blasformteil als aus Polyethylen ausgebildet. Polyethylen ist transparent, so daß das Füllmedium, eingefärbter Spiritus gut sichtbar ist. Desweiteren ist Polyethylen beständig gegenüber dem Spiritus. Die leichte Verformbarkeit des Überlaufreservoirs 11 verhindert auch, daß sich ein Unterdruck in der Flüssigkeitsanzeige 9 einstellt, bei dem die Flüssigkeit in der Flüssigkeitsanzeige 9 nach oben gezogen werden könnte und ein fehlerhafter Füllstand angezeigt werden könnte. Das Überlaufreservoir 11 verjüngt sich in Richtung Flüssigkeitsanzeige 9 in konischer Form. Dies hat zum Vorteil, daß eventuell ins Überlaufreservoir 11 eingetretene Flüssigkeit der Flüssigkeitsanzeige 9 vollständig wieder in die Flüssigkeitsanzeige 9 zurücklaufen kann. Bei der Montage wird das einstückige Blasformteil, beinhaltend die Komponenten Faltenbalg 8, Druckplatte 12, Flüssigkeitsanzeige 9 und Überlaufreservoir 11, gefüllt mit eingefärbtem Spiritus als Anzeigeflüssigkeit, in dem Griffteil 2 vormontiert. Dabei wird das Blasformteil durch die jeweiligen Anschlagsflächen 6, 13 und 14 fixiert. Zur weiteren Vormontage wird der Kolben 3 mit Feder 4 in dem Griffteil 2 eingebaut. Das so fertig montierte Griffteil 2 wird anschließend mit der Thermoskanne 1 verbunden. Dazu wird das Griffteil 2 mit der Thermoskanne 1 verschnappt.

### Bezugszeichenliste

- 1: Thermoskanne
- 2: Griffteil
- 3: Kolben
- 4: Feder
- 5: Falz
- 6: Anschlagsfläche
- 7: Justierelement
- 8: Faltenbalg
- 9: Flüssigkeitsanzeige
- 10: Falz
- 11: Überlaufreservoir
- 12: Druckplatte
- 13: Anschlagsfläche
- 14: Anschlagsfläche

## Patentansprüche

1. Behältnis für den Haushaltsgebrauch mit einer Füllstandsanzeige, **dadurch gekennzeichnet, daß** an mindestens einer Auflage des Behältnisses eine als Bestandteil des Behältnisses ausgebildete Aufnahmevorrichtung für die Gewichtskraft auf diese Auflage angeordnet ist, und einer vorgegebenen Gewichtskraft eine definierte Auslenkung der Aufnahmevorrichtung zugeordnet ist und diese Auslenkung mit der Höhe einer Flüssigkeitssäule in einem Anzeigeelement korreliert ist.

2. Behältnis nach Anspruch 1, **dadurch gekennzeichnet, daß** die Aufnahmevorrichtung einen Kolben (3) aufweist, der in Wirkverbindung mit einem Flüssigkeitsreservoir veränderlichen Volumens angeordnet ist, das mit der Flüssigkeitssäule verbunden ist.

3. Behältnis nach Anspruch 1, **dadurch gekennzeichnet, daß** der Kolben (3) federvorgespannt ist.

4. Behältnis nach Anspruch 2, **dadurch gekennzeichnet, daß** das Flüssigkeitsreservoir als Faltenbalg (8) ausgebildet ist.

5. Behältnis nach Anspruch 1, **dadurch gekennzeichnet, daß** das Anzeigeelement ein Überlaufreservoir (11) für die Flüssigkeit der Flüssigkeitssäule an seinem oberen Ende aufweist.

6. Behältnis nach Anspruch 5, **dadurch gekennzeichnet, daß** das Überlaufreservoir 11 einen konischen Übergang zu den die Flüssigkeitssäule aufnehmenden Teil, des Anzeigeelementes aufweist.

7. Behältnis nach Anspruch 4 und 5, **dadurch gekennzeichnet, daß** Kompressibilität des Überlaufreservoirs (11) mindestens gleich groß ist, wie die des Flüssigkeitreservoirs.

8. Behältnis nach Anspruch 1 **dadurch gekennzeichnet, daß** das die Flüssigkeitssäule aufnehmende Anzeigeelement aus einem flexiblem Material besteht.

9. Behältnis nach Anspruch 8, **dadurch gekennzeichnet, daß** das die Flüssigkeitssäule aufnehmende Anzeigelement aus Polyethylen besteht.

10. Behältnis nach Anspruch 1, **dadurch gekennzeichnet, daß** das Anzeigeelement als einstückiges Blasformteil ausgebildet ist.

11. Behältnis nach Anspuch 4 und 5, **dadurch gekennzeichnet, daß** das Flüssigkeitsreservoir und Überlaufreservoir 11 aus thermoplastischem Elastomer bestehen.

12. Behältnis nach Anspruch 1, **dadurch gekennzeichnet, daß** die Flüssigkeit der Flüssigkeitssäule eingefärbter Spiritus ist.

13. Behältnis nach Anspruch 1, **dadurch gekennzeichnet, daß** die Flüssigkeit der Flüssigkeitssäule Polyethylenglykol ist.

14. Behältnis nach Anspruch 1, **dadurch gekennzeichnet, daß** das Anzeigeelement derart ausgestaltet ist, daß eine Auslenkung der Aufnahmevorrichtung von ca. 2 mm einen Hub der Flüssigkeitssäule von ca. 50 mm entspricht.

15. Behältnis nach Anspruch 2, **dadurch gekennzeichnet, daß** eine Druckplatte (12) auf der dem Kolben (3) abgewandten Seite des Flüssigkeitsreservoirs angeordnet ist, an der sich die Gegenkraft zu der vom Kolben (3) aufgebrachten Kraft abstützt.

16. Behältnis nach Anspruch 1, **dadurch gekennzeichnet, daß** das Anzeigeelement in einem Griffteil (2) das Behältnisses angeordnet ist.

17. Behältnis nach Anspruch 1, **dadurch gekennzeichnet, daß** das Behältnis auf einer Dreipunktauflage steht und an einer der drei Auflagen die Aufnahmevorrichtung für die Gewichtskraft angeordnet ist.

18. Behältnis nach Anspruch 17, **dadurch gekennzeichnet, daß** die Dreipunktauflage zwei vordere Auflagepunkte aufweist, die Bestandteil des Grundkörpers des Behältnisses sind, wobei ihre Verbindungslinie eine Drehachse bildet, um die das Behältnis drehbar in einen hinteren Auflagepunkt einfedern kann.

19. Behältnis nach Anspruch 16, **dadurch gekennzeichnet, daß** der hintere Auflagepunkt im Griffteil (2) des Behältnisses angeordnet ist.

20. Behältnis nach Anspruch 17, **dadurch gekennzeichnet, daß** die drei Auflagepunkte um ca. 120 Grad versetzt sind.

21. Verfahren zur Herstellung eines Behältnisses nach einem der vorstehenden Ansprüche **dadurch gekennzeichnet, daß** alle wesentlichenTeile der Füllstandsanzeige in einem Gehäuseteil für ein Griffteil (2) fertig vormontiert werden und anschließend dieses fertig vormontierte Teil mit dem Behältnis verbunden wird.

## Claims

1. Container for domestic use with a filling state indicator, **characterised in that** arranged at at least a support of the container is a receiving device, which is constructed as a component of the container, for the weight force of this support, a defined deflection of the receiving device being associated with a predetermined weight force and being correlated with the level of a liquid column in an indicating element.

2. Container according to claim 1, **characterised in that** the receiving device comprises a piston (3) arranged in operative connection with a liquid reservoir of variable volume connected with the liquid column.

3. Container according to claim 1, **characterised in that** the piston (3) is spring-biased.

4. Container according to claim 2, **characterised in that** the liquid reservoir is constructed as a bellows (8).

5. Container according to claim 1, **characterised in that** the indicating element comprises an overflow reservoir (11) for the liquid of the liquid column at its upper end.

6. Container according to claim 5, **characterised in that** the overflow reservoir (11) has a conical transition to the part, which receives the liquid column, of the indicating element.

7. Container according to claim 4 and 5, **characterised in that** the compressibility of the overflow reservoir (11) is at least the same amount as that of the liquid reservoir.

8. Container according to claim 1, **characterised in that** the indicating element receiving the liquid column consists of a flexible material.

9. Container according to claim 8, **characterised in that** the indicating element receiving the liquid column consists of polyethylene.

10. Container according to claim 1, **characterised in that** the indicating element is constructed as an integral blow-moulded part.

11. Container according to claim 4 and 5, **characterised in that** the liquid reservoir and overflow reservoir (11) consist of thermoplastic elastomer.

12. Container according to claim 1, **characterised in that** the liquid of the liquid column is coloured spirit.

13. Container according to claim 1, **characterised in that** the liquid of the liquid column is polyethylene glycol.

14. Container according to claim 1, **characterised in that** the indicating element is designed in such a manner that a deflection of the receiving device of approximately 2 mm corresponds with a rise of the liquid column of approximately 50 mm.

15. Container according to claim 2, **characterised in that** a pressure plate (12) is arranged on the side of the liquid reservoir remote from the piston (13), at which the counter-force to the force applied by the piston (3) is supported.

16. Container according to claim 1, **characterised in that** the indicating element is arranged in a handle (2) of the container.

17. Container according to claim 1, **characterised in that** the container stands on a three-point support and the receiving device for the weight force is arranged at one of the three supports.

18. Container according to claim 17, **characterised in that** the three-point support has two front support points which are a component of the basic body of the container, wherein the connecting line thereof forms an axis of rotation about which the container can rotatably resiliently deflect into rearward support point.

19. Container according to claim 18, **characterised in that** the rearward support point is arranged in the handle (2) of the container.

20. Container according to claim 17, **characterised in that** the three support points are offset by approximately 120 degrees.

21. Method of producing a container according to one of the preceding claims, **characterised in that** all essential parts of the filling state indicator are premounted in finished state in a housing part for a handle (2) and subsequently this part premounted to finished state is connected with the container.

## Revendications

1. Récipient à usage ménager avec un affichage du niveau de remplissage, **caractérisé en ce que**, sur au moins une surface d'appui du récipient, un dispositif de reprise du poids, conçu sous forme d'élément constitutif du récipient est disposé sur cette surface d'appui et une déviation prédéfinie du dispositif de reprise est affectée à un poids prescrit et cette déviation est mise en corrélation avec la hauteur d'une colonne à liquide dans un élément d'affichage.

2. Récipient selon la revendication 1, **caractérisé en ce que** le dispositif de reprise présente un piston (3), disposé en liaison active avec un réservoir à liquide de volume variable, lequel est relié à une colonne à liquide.

3. Récipient selon la revendication 1, **caractérisé en ce que** le piston (3) est précontraint.

4. Récipient selon la revendication 2, **caractérisé en ce que** le réservoir à liquide est conçu sous forme de soufflet (8).

5. Récipient selon la revendication 1, **caractérisé en ce que** l'élément d'affichage présente sur son extrémité supérieure un réservoir de trop-plein (11) destiné au liquide de la colonne à liquide.

6. Récipient selon la revendication 5, **caractérisé en ce que** le réservoir de trop-plein 11 présente un passage conique vers la pièce de l'élément d'affichage qui reçoit la colonne à liquide.

7. Récipient selon l'une quelconque des revendications 4 et 5, **caractérisé en ce que** la compressibilité du réservoir de trop-plein (11) est au moins égale à celle du réservoir à liquide.

8. Récipient selon la revendication 1, **caractérisé en ce que** l'élément d'affichage qui reçoit la colonne à liquide est constitué d'une matière flexible.

9. Récipient selon la revendication 8, **caractérisé en ce que** l'élément d'affichage qui reçoit la colonne à liquide est en polyéthylène.

10. Récipient selon la revendication 1, **caractérisé en ce que** l'élément d'affichage est conçu sous forme d'une pièce monobloc moulée par soufflage.

11. Récipient selon l'une quelconque des revendications 4 et 5, **caractérisé en ce que** le réservoir à liquide et le réservoir de trop-plein (11) sont conçus en élastomère thermoplastique.

12. Récipient selon la revendication 1, **caractérisé en ce que** le liquide de la colonne à liquide est de l'alcool teinté.

13. Récipient selon la revendication 1, **caractérisé en ce que** le liquide de la colonne à liquide est du polyéthylène glycol.

14. Récipient selon la revendication 1, **caractérisé en ce que** l'élément d'affichage est conçu de manière à ce qu'une déviation d'environ 2 mm du dispositif de reprise corresponde à une levée de 50 mm environ de la colonne à liquide.

15. Récipient selon la revendication 2, **caractérisé en ce qu'**une plaque d'appui (12) est disposée sur la face du réservoir à liquide qui est opposée au piston (3), sur laquelle la force de réaction à la force appliquée par le piston (3) s'appuie.

16. Récipient selon la revendication 1, **caractérisé en ce que** l'élément d'affichage est disposé dans une partie du récipient formant la poignée (2).

17. Récipient selon la revendication 1, **caractérisé en ce que** le récipient se trouve sur une surface d'application à trois points et le dispositif de reprise du poids est disposé sur l'une des trois surfaces d'application.

18. Récipient selon la revendication 17, **caractérisé en ce que** la surface d'application à trois points présente deux points d'application antérieurs qui sont des éléments constitutifs du corps de base du récipient, la ligne de liaison de ces derniers formant un axe de rotation, autour duquel le récipient peut s'infléchir de manière rotative dans un point d'application postérieur.

19. Récipient selon la revendication 16, **caractérisé en ce que** le point d'application postérieur est disposé dans la pièce formant la poignée (2) du récipient.

20. Récipient selon la revendication 17, **caractérisé en ce que** les trois points d'application sont décalés d'environ 120 degrés.

21. Procédé de fabrication d'un récipient selon l'une quelconque des revendications précédentes, **caractérisé en ce que** toutes les pièces essentielles de l'affichage du niveau de liquide sont préalablement montées à l'état fini dans un partie du corps destinée à une pièce formant poignée (2) et qu'ensuite cette pièce finie préalablement montée est reliée au récipient.
